# EUROPÄISCHE PATENTSCHRIFT

(11) **EP 0 498 228 B1**
(45) Veröffentlichungstag und Bekanntmachung des Hinweises auf die Patenterteilung: **21.06.1995**
(21) Anmeldenummer: 92101125.0
(22) Anmeldetag: 24.01.1992
(51) Int. Cl.: G03B 42/04, G03B 17/32

(54) **Kunststoffprofil-Scharnier für Röntgenblattfilmkassetten**
Plastic profile hinge for X-ray sheet-film cassette
Charnière profilée en matière plastique pour cassette de film en feuille sensible à rayons X

(30) Priorität: 06.02.1991 DE 9101332 U
(43) Veröffentlichungstag der Anmeldung: 12.08.1992
(73) Patentinhaber: Agfa-Gevaert AG, 51373 Leverkusen (DE)
(72) Erfinder: Bauer, Walter, W-8000 München 83 (DE)

(56) Entgegenhaltungen:
- EP-A- 0 051 248
- WO-A-88/08151
- WO-A-90/02356

## Beschreibung

Die Erfindung betrifft ein Kunststoffprofil-Scharnier für eine Röntgenblattfilmkassette gemäß dem Oberbegriff des Hauptanspruchs.

Aus der DE-PS 29 17 547 ist eine Röntgenblattfilmkassette mit einem Kunststoffprofil-Scharnier gemäß dem Oberbegriff des Hauptanspruchs bekannt. Bei diesem bekannten Scharnier sind entlang des Kunststoffprofils verlaufende klauenartige Nuten "T"-förmig ausgebildet. Die "T"-förmige Ausbildung der klauenartigen Nuten, die mit entsprechenden komplementären Vorsprüngen der die Röntgenblattfilmkassette bildenden Teile verrastbar sind, hat den Nachteil, daß das Scharnier schwer montierbar ist und daß die klauenartige Nut beim Öffnen der Kassette die Tendenz hat, die komplementären Vorsprünge, die sie umschließt, freizugeben. Ein weiterer Nachteil des bekannten Kunststoffprofil-Scharniers ist, daß es keine definierte Biegelinie aufweist und damit keine definierten Hebelverhältnisse.

Der Erfindung liegt die Aufgabe zugrunde, ein Scharnier der eingangs genannten Art so weiterzubilden, daß es leicht montierbar ist und beim Öffnen der Röntgenblattfilmkassette die klauenartigen Nuten mit den komplementären Vorsprüngen fest im Eingriff bleiben und daß das Scharnier definierte Biegelinien aufweist.

Diese Aufgabe wird erfindungsgemäß gelöst durch die Merkmale des Hauptanspruchs.

Die Erfindung wird anhand von Zeichnungen näher erläutert. Es zeigen
- Fig. 1: einen Schnitt durch eine Röntgenblattfilmkassette mit einem erfindungsgemäßen Kunststoffprofilscharnier,
- Fig. 2: einen Querschnitt eines erfindungsgemäßen Kunststoffprofilscharniers,
- Fig. 3: einen vergrößerten Teil des Schnittes gemäß Figur 1, und
- Fig. 4: eine Ansicht gemäß Figur 3, wobei die Kassettenteile um 180° geschwenkt sind.

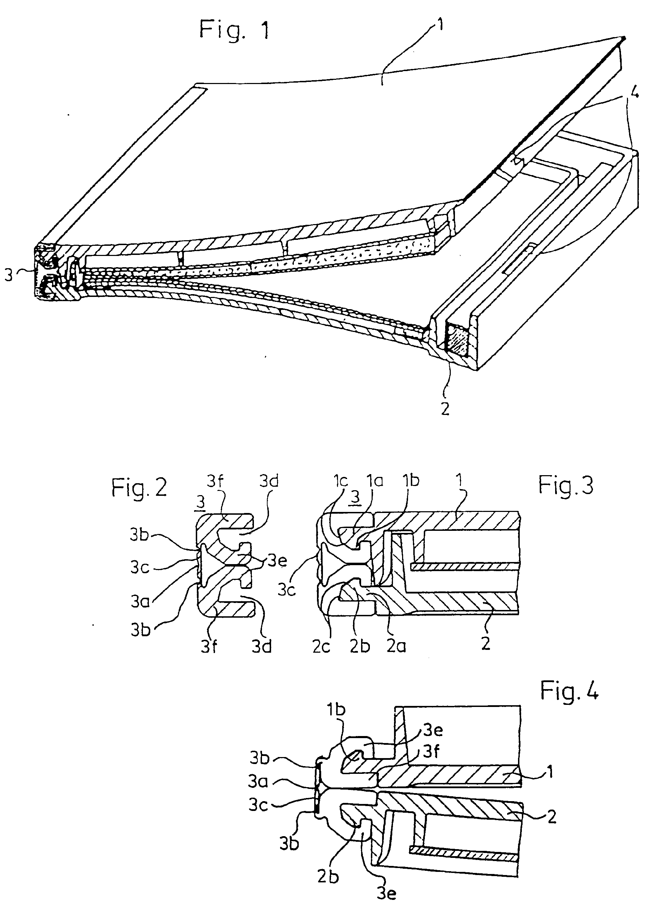

In Figur 1 ist ein Röntgenblattfilmkassettenteil, das den Deckel der Röntgenblattfilmkassette bildet, mit 1 bezeichnet und ein Bodenteil mit 2. Boden- und Deckelteil 2, 1 sind an einer einem Scharnier gegenüberliegenden Schmalseite 4 miteinander verriegelbar. Das Scharnier umfaßt eine Kunststoffleiste 3.

Ein Querschnitt der vom Scharnier umfaßten Kunststsoffleiste 3 ist in Figur 2 gezeigt, wobei je eine, an je einer Längsseite der Kunststoffleiste 3 verlaufende, klauenartige Nut mit 3d bezeichnet ist. Die klauenartige Nut 3d ist von Schenkeln 3e, 3f umgeben, die verstärkt ausgebildet sind. Ein zwischen den verstärkt ausgebildeten Schenkeln 3f, 3e der ersten Längsseite und den Schenkeln 3f, 3e der zweiten Längsseite der Kunststoffleiste 3 verlaufender Steg 3c weist drei Einschnürungen 3a, 3b auf. Die Einschnürungen 3a, 3b definieren drei Biegelinien, um die die Kassettenteile beim Öffnen der Kassette geschwenkt werden.

In Figur 3 ist je ein komplementärer Vorsprung je Kassettenteil mit 1a bzw. 2a bezeichnet. Die komplementären Vorsprünge 1a, 2a weisen je Vorsprung je eine Nase 1b, 2b auf sowie je eine Dachkante 1c, 2c. Bei der Montage des Scharniers wird der Schenkel 3e der klauenartigen Nuten 3d über die Dachkanten 1c bzw. 2c gleiten, wodurch die Montage erheblich vereinfacht wird. Bisher war es notwendig, das Scharnier aufzuschieben; ein verhältnismäßig langwieriger Vorgang.

In Figur 4 sind Boden- und Deckelteil 2 und 1 um 180° geschwenkt dargestellt, wobei die Schenkel der klauenartigen Nuten 3e, 3f um die mittels der Einschnürungen 3b definierten Biegelinien geschwenkt sind.

Wird nun die Röntgenblattfilmkassette geöffnet, also Boden- und Deckelteil 2, 1 entriegelt und anschließend das Deckelteil 1 um 180° geschwenkt, so wird das Deckelteil 1 um die durch die Einschnürung 3a definierte Biegelinie geschwenkt. Somit sind die Relativbewegungen der Kassettenteile zueinander definiert. Wird der Deckelteil 1 um weitere 180° geschwenkt, geschieht dies um die beiden mittels der Einschnürungen 3b definierten Biegelinien. Die Kraftverteilung im Scharnier der völlig geöffneten Röntgenblattfilmkassette ist dabei derart, daß die Schenkel 3e der klauenartigen Nuten 3d gegen die Nase 1b, 2b der komplementären Vorsprünge 1a, 2a gedrückt werden und somit die klauenartige Nut fest im Eingriff mit dem komplementären Vorsprung bleibt. Die bei den existierenden Röntgenblattfilmkassetten bestehende Tendenz, daß sich die klauenartige Nut von dem komplementären Vorsprung ablöst, besteht hierbei nicht. Das erfindungsgemäße Scharnier führt also zu definierten Kraft- und Bewegungsverhältnissen und zu einer stabilen Röntgenblattfilmkassette.

## Patentansprüche

1. Röntgenblattfilmkassette mit zwei mittels eines Scharniers aneinander angelenkten Kassettenteilen (1, 2), die an ihrer der Scharnierseite gegenüberliegenden Schmalseite miteinander verriegelbar sind, wobei das Scharnier eine Kuntstoffleiste (3) umfaßt, deren Längsseiten klauenartige Nuten (3d) aufweisen, die mit komplementären Vorsprüngen (1a, 2a) an den Kassettenteilen verrastbar sind, dadurch gekennzeichnet, daß die klauenartigen Nuten (3d) umgebenden Schenkel (3e, 3f) der Kunststoffleiste (3) verstärkt ausgebildet sind, daß die komplementären Vorsprünge (1a, 2a) je eine Nase (1b, 2b) aufweisten, die bei geschlossener Röntgenblattfimkassette in das Kassetteninnere zeigt, daß die Nasen (1b, 2b) je eine Dachkante (1c, 2c) aufweisen derart, daß bei der Montage die Schenkel über die Dachkante gleiten können und daß die Kunststoffleiste (3) drei Einschnürungen (3a, 3b) aufweist, die drei entsprechende Biegelienien definieren, um die die Kassettenteile beim Öffnen der Kassette geschwenkt werden.

## Claims

1. X-ray sheet film cassette, having two cassette parts (1, 2) which are coupled to one another by means of a hinge and are interlockable at their narrow side opposite the hinge side, the hinge comprising a plastics strip (3), whose longitudinal sides have claw-like grooves (3d) which are latchable with complementary projections (1a, 2a) on the cassette parts, characterized in that the limbs (3e, 3f) of the plastics strip (3) which surround the claw-like grooves (3d) are strengthened, that the complementary projections (1a, 2a) each have a lug (1b, 2b) which, when the X-ray sheet film cassette is closed, is directed into the interior of the cassette, that the lugs (1b, 2b) each have a roof edge (1c, 2c) such that during assembly the limbs may slide over the roof edge, and that the plastics strip (3) has three constrictions (3a, 3b) which define three corresponding bending lines about which the cassette parts are swivelled upon opening of the cassette.

## Revendications

1. Cassette de film en feuille sensible aux rayons X, comprenant deux parties de cassette (1, 2) articulées l'une à l'autre au moyen d'une charnière, lesdites parties de cassette pouvant être verrouillées l'une à l'autre au niveau de leur côté étroit opposé au côté de la charnière, et la charnière comprenant une barrette en matière plastique (3) dont les côtés longitudinaux comportent des gorges (3d) en forme de griffe qui peuvent être enclenchées avec des saillies complémentaires (1a, 2a) sur les parties de cassette, caractérisée en ce que des ailes (3e, 3f) de la barrette en matière plastique (3), qui entourent les gorges (3d) en forme de griffe, sont réalisées de manière renforcée ; en ce que les saillies complémentaires (1a, 2a) comportent chacune un doigt (1b, 2b) qui est dirigé vers l'intérieur de la cassette lorsque la cassette de film est fermée; en ce que les doigts (1b, 2b) comportent chacun une arête en forme de toiture (1c, 2c), de telle manière que lors du montage les ailes peuvent glisser par dessus les arêtes en forme de toiture ; et en ce que la barrette en matière plastique (3) comporte trois rétrécissements (3a, 3b) qui définissent trois lignes de pliage correspondantes, autour desquelles les parties de cassette peuvent être basculées lors de l'ouverture de la cassette.
